**Europäisches Patentamt**

**European Patent Office**

**Office européen des brevets**

(19)

(11) Numéro de publication: **0 225 818
B1**

(12) # FASCICULE DE BREVET EUROPEEN

(45) Date de publication du fascicule du brevet:
**05.04.89**

(51) Int. Cl.⁴: **G02B 23/08**, G02B 27/00

(21) Numéro de dépôt: **86402358.5**

(22) Date de dépôt: **22.10.86**

(54) **Episcope à système de visualisation incorporé.**

(30) Priorité: **25.11.85 FR 8517366**

(43) Date de publication de la demande:
**16.06.87 Bulletin 87/25**

(45) Mention de la délivrance du brevet:
**05.04.89 Bulletin 89/14**

(84) Etats contractants désignés:
**DE ES IT**

(56) Documents cités:
**FR-A- 2 269 095
FR-A- 2 295 442
US-A- 3 940 204
US-A- 4 065 206**

(73) Titulaire: **SOCIETE FRANCAISE D'EQUIPEMENTS POUR LA NAVIGATION AERIENNE (S.F.E.N.A.),
B.P. 59 Aérodrome de Villacoublay, F-78141 Velizy Villacoublay Cédex(FR)**

(72) Inventeur: **Loiseaux, Didier, 8, Résidence du Moulin de la Planche, F-91120 Villebon Sur Yvette(FR)**

(74) Mandataire: **Marquer, Francis et al, 35, Avenue Victor Hugo, F-78960 Voisins le Bretonneux(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention concerne un épiscope perfectionné, c'est-à-dire un appareil d'optique à miroirs et à prismes faisant habituellement partie de l'équipement des véhicules blindés. Dans ce type d'application, il sert à permettre à l'équipage confiné à l'intérieur du véhicule et, en particulier, au pilote, une vision à l'extérieur sans être exposé aux projectiles ennemis.

A cet effet, cet appareil fait intervenir au moins deux éléments réflecteurs, en général deux prismes, à savoir:
– un premier prisme désigné ci-après "prisme récepteur", dont la face réceptrice, qui s'étend à l'extérieur du blindage, est orientée dans l'axe du champ de vision extérieur que l'on désire couvrir, et qui sert à réfléchir les rayons lumineux vers l'intérieur du véhicule, de préférence dans l'axe de l'orifice du blindage, et
– un deuxième prisme désigné ci-après "prisme oculaire", situé à l'intérieur du véhicule et qui sert à réfléchir les rayons transmis par le prisme récepteur, dans l'axe de vision normale du pilote ou du membre de l'équipage concerné.

Dans l'état actuel de la technique, pour améliorer les performances de l'épiscope, tant en ce qui concerne sa tenue mécanique que sa qualité optique, les prismes utilisés présentent une forme sensiblement trapézoïdale rectangle et sont disposés de manière à former une structure prismatique dans laquelle les faces latérales et les bases des deux prismes sont respectivement alignées, les deux faces à angle droit étant sensiblement jointives. Un tel épiscope est décrit dans FR-A 2 269 095.

Dans ce cas, les réflexions s'effectuent sur les deux faces obliques ou dioptres des deux prismes, tandis que le trajet optique entre ces deux dioptres s'effectue presque uniquement dans la matière constituant ces deux prismes.

On sait, par ailleurs, qu'un pilote de véhicule blindé doit pouvoir recevoir à tout moment, sans avoir à interrompre sa vision à l'extérieur, un nombre important d'informations pouvant aussi bien consister en des ordre de manœuvre qu'en des informations utiles au pilotage, certaines de ces informations pouvant contenir des instructions à exécuter le plus rapidement possible.

Or, les moyens actuellement utilisés (en général des réseaux phoniques) étant partagés avec des liaisons radio extérieures, il s'ensuit une possibilité de saturation et/ou de retard dans l'acheminement des ordres, sans possibilité de transmission simultanée de plusieurs informations.

Dans le but de résoudre ce problème, l'invention propose à cet effet d'implanter dans l'épiscope un système de visualisation permettant de présenter au pilote, des informations par exemple sous forme de symboles lumineux, collimatées à l'infini et se superposant au paysage extérieur qui se trouve dans le champ de l'épiscope.

Toutefois, en raison de la spécificité de cette application, une telle implantation ne peut être envisagée que dans la mesure où elle répond à un certain nombre de critères parmi lesquels on mentionnera les suivants:
– l'épiscope ainsi équipé doit conserver une grande simplicité et surtout un encombrement réduit;
– il doit présenter, au moins en grande partie, une conformation similaire à celle des épiscopes classiques, de manière à pouvoir se monter, sans transformation notable, sur des matériels existants.

Par ailleurs, il doit être d'une discrétion totale vis-à-vis d'un observateur extérieur, ce qui implique qu'il ne soit le siège d'aucune émission de lumière à l'extérieur et ce, malgré la présence du système de visualisation qui fait nécessairement intervenir au moins une source lumineuse.

En outre, il doit assurer la conservation des valeurs de champs de vision par rapport à des épiscopes classiques de mêmes types.

Pour parvenir à ces résultats, l'invention propose d'associer au prisme oculaire un système de visualisation comprenant:
– un module de génération d'une image lumineuse de préférence formée de symboles lumineux dont l'éclairement peut être commandé de façon indépendante, cet organe étant agencé de manière à émettre un rayonnement lumineux passant au moins partiellement au travers du dioptre du prisme oculaire et se propageant à l'intérieur de celui-ci en sens inverse par rapport aux rayons lumineux provenant de l'extérieur et transmis par le prisme récepteur; et
– un composant optique holographique apte à collimater à l'infini l'image engendrée par le module de génération et à réfléchir les rayons lumineux produits par cette image parallèlement aux rayons lumineux émanant du prisme récepteur et dans le même sens.

Ainsi, le pilote du véhicule blindé pourra voir les symboles lumineux émis par le module de génération, en superposition sur le paysage extérieur qui se trouve dans le champ de l'épiscope. Il pourra donc recevoir des informations et/ou, en particulier, des ordres de manœuvre sans interrompre sa vision à l'extérieur.

Il convient de noter que dans ce système, la lumière émise par le module de génération doit être monochromatique ou ne comprendre qu'un spectre très étroit de longueurs d'onde (par exemple plusieurs couleurs). Dans ce cas, le composant optique holographique utilisé est conçu pour assurer une réflexion totale des rayons lumineux de ce spectre. Ainsi, la lumière émise par le module de génération sera totalement réfléchie vers le pilote et ne pourra donc pas ressortir à l'extérieur par le prisme récepteur.

Selon un mode d'exécution particulièrement avantageux de l'invention, le composant optique holographique est incorporé au prisme oculaire. Celui-ci est alors réalisé en deux parties accolées l'une à l'autre selon une surface de jonction sensiblement perpendiculaire au trajet des rayons lumineux et situé à proximité de la face à angle droit du prisme. L'une des faces en contact de ces deux parties est alors munie d'un hologramme comprenant une couche de gélatine convenablement enregistrée.

Avantageusement, le composant optique holographique pourra être agencé de manière à effectuer la correction des aberrations géométriques de l'optique utilisée dans le système de visualisation. Donner de la courbure à la surface de jonction permet entre autre d'obtenir ce résultat.

Un mode de réalisation de l'invention sera décrit ci-après, à titre d'exemple non limitatif, avec référence aux dessins annexés dans lesquels:

La figure 1 est une vue en coupe schématique d'un épiscope de type classique;

La figure 2 est une coupe similaire d'un épiscope selon l'invention équipé d'un système de visualisation;

La figure 3 est une représentation schématique illustrant le principe de l'enregistrement de l'hologramme;

La figure 4 est une vue frontale d'un module de génération de symboles pouvant être utilisé dans le système de visualisation représenté figure 2.

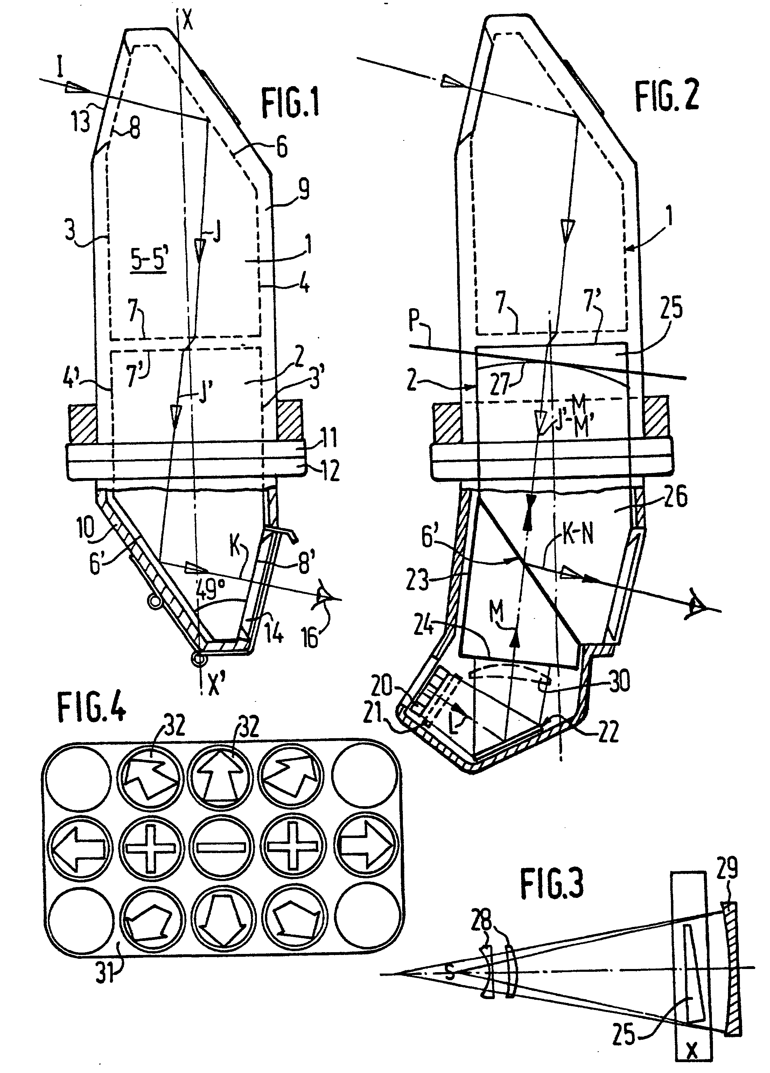

L'épiscope représenté sur la figure 1 correspond à un épiscope frontal d'un poste de pilotage de véhicule blindé. Il se compose de deux prismes, à savoir: un prisme récepteur 1 et un prisme oculaire 2 (en traits interrompus). Ces deux prismes présentent une forme sensiblement identique, à savoir: une forme trapézoïdale rectangle comprenant une grande et une petite bases 3, 3', 4, 4', deux faces latérales 5, 5' opposées parallèles au plan de la figure, une face oblique ou dioptre 6, 6' servant de réflecteur et une face droite 7, 7' perpendiculaire à l'axe longitudinal X, X' du prisme et située à l'opposé du dioptre 6, 6'. La grande base de chacun de ces deux prismes est terminée du côté du dioptre par une face légèrement oblique 8, 8' qui sert de face réceptrice, dans le cas du prisme récepteur 1 et de face oculaire dans le cas du prisme oculaire 2.

Ces deux prismes sont disposés coaxialement mais sont orientés à l'opposé l'un de l'autre, de sorte que les faces latérales 5, 5' sont coplanaires deux à deux, la grande base 3, 3' de l'un des deux prismes prolongeant la petite base 4, 4' de l'autre prisme, tandis que les face droites 7, 7', parallèles l'une à l'autre, sont très faiblement distantes.

L'ensemble formé par ces deux prismes 1, 2 est logé dans un boîtier de forme sensiblement complémentaire et réalisé en deux parties 9, 10 solidarisées l'une à l'autre au moyen de collets de fixation 11, 12. Ce boîtier comprend deux ouvertures 13, 14 respectivement situées au droit de la face réceptrice 8 et de la face oculaire 8'.

Dans l'exemple représenté sur la figure 1, les rayons lumineux I émis par les objets se trouvant dans le champ de l'épiscope pénètrent à l'intérieur du prisme récepteur 1 par la face réceptrice 8, puis sont réfléchis (rayons J) par le dioptre 6 en direction du prisme oculaire 2 selon un axe faiblement incliné ou parallèle à l'axe commun X, X' des deux prismes 1, 2.

Au passage dans l'intervalle compris entre les deux faces droites 7, 7', les rayons J' ne subissent qu'un faible décalage. Sur le dioptre 6' ces rayons sont à nouveau réfléchis (rayons K) vers la face oculaire 8' au droit de laquelle se trouve l'œil 16 du pilote. L'inclinaison des faces 8 et 8' est prévue de manière à obtenir des angles d'incidence des rayons I et K voisins ou égaux à 90°.

L'épiscope perfectionné représenté sur la figure 2 utilise deux prismes 1, 2 de forme identique à ceux de la figure 1 et donc un même principe optique pour la vision du pilote à l'extérieur. Toutefois, dans ce cas, le prisme oculaire 2 est associé à un système de visualisation comprenant;
– un module de génération de symboles lumineux 20 comportant une grille objet dans laquelle sont découpées, par exemple par attaque électrochimique, les formes des symboles que l'on désire visualiser, un diffuseur pouvant consister en une paroi en verre dépoli et un système d'éclairage pouvant avantageusement consister en des diodes électroluminescentes, à raison d'une diode par symbole, encastrées dans une structure en nid d'abeille de façon à les isoler les unes des autres;
– une optique de champ 21 de type classique ou holographique apte à permettre une bonne lisibilité des symboles lorsque le pilote déplace la tête (notamment en agrandissant la pupille du système);
– un miroir de repli 22 pouvant être éventuellement orientable de façon à pouvoir présenter au pilote plusieurs grilles de symboles (mode de pilotage, mode de franchissement, etc.), ce miroir de repli 22 étant situé de manière à ce que les rayons incidents L produits par l'ensemble module 20/optique de champ 21 soient réfléchis (rayons M) vers le dioptre 6' en sens inverse des rayons lumineux J' provenant de l'extérieur et réfléchis par le prisme récepteur 1;
– un prisme compensateur 23 de section triangulaire rectangle dont la face oblique est collée au dioptre 6' du prisme oculaire 2, et dont l'une des faces droites 24 s'étend normalement aux rayons lumineux M réfléchis par le miroir de repli 22, ce prisme compensateur étant destiné à éviter la réflexion totale sur le dioptre 6' (et, par conséquent, à assurer la transmission à travers ce dioptre) et à annuler l'astigmatisme introduit par celui-ci sur les rayons M.

Par ailleurs, le système de visualisation fait intervenir un composant holographique incorporé au prisme oculaire 2 et agencé de manière à collimater à l'infini l'image produite par le module 20 et à réfléchir (rayons M') les rayons lumineux M produits par cette image et transmis à travers le dioptre 2 parallèlement aux rayons lumineux J' fournis par le prisme récepteur et dans le même sens que ceux-ci. Ainsi, par suite de cette réflexion, les rayons lumineux M' seront à nouveau réfléchis par le dioptre 6' vers la face oculaire 8' (rayons N).

A cet effet, le dioptre 6' devra subir un traitement de surface local de façon à permettre la transmission/réflexion des rayons lumineux provenant du module 20. De même, le composant holographique sera conçu de manière à ne pas affecter, d'une façon significative, les rayons lumineux transmis par le prisme récepteur 2.

Dans cet exemple, le prisme oculaire 2 est réalisé en deux parties 25, 26 collées l'une à l'autre selon une surface de jonction P sensiblement perpendiculaire au trajet des rayons lumineux J', M, M' et passant à proximité de la face 7'. La partie 25 se présente alors sous la forme d'une lame sensiblement "prismatique" portant sur sa face 27 un hologramme. Cet hologramme peut être obtenu, de façon classique, en déposant sur la face 27 une couche de gélatine bichromatée puis en enregistrant l'hologramme au moyen d'un montage optique du type de celui représenté sur la figure 3, dans lequel la lame 25 portant l'émulsion est disposée entre le point source S auquel sont associés une optique compensatrice 28 et un miroir à profil concave 29.

Il convient de noter que compte tenu des caractéristiques du système de visualisation précédemment décrit (pas de parallaxe (off axis) sur l'hologramme) et dans le cas de champs faibles, la collimation de l'image lumineuse produite par le module 20 sera assurée uniquement par le composant optique holographique (sans optique relais). Si le champ à couvrir devait être plus important, et dans le cas où la correction des aberrations géométriques ne pourrait pas être reportée au niveau des optiques d'enregistrement, une optique correctrice 30 (représentée en traits interrompus) pourra être implantée, par exemple entre le miroir de repli 22 et le prisme compensateur 23.

La figure 4 montre un exemple de grille objet 31 du module de génération des symboles 20. Dans cet exemple, les flèches peuvent indiquer un ordre de changement de direction et les symboles + et − ordre d'accélération ou de ralentissement. Au droit de ces symboles, se trouvent des cavités cylindriques 32 formant une structure en nid d'abeille et dans lesquelles viennent s'encastrer des sources lumineuses telles que des diodes électroluminescentes.

Il convient de noter toutefois que l'invention ne se limite pas à cette solution. Le module de génération de symboles lumineux 20 pourrait utiliser tout autre moyen faisant intervenir, par exemple, un tube cathodique, une cellule à cristaux liquides, un dispositif de déflexion commandée d'un faisceau laser sur un élément diffusant, etc.

De même, au lieu de d'hologramme, il serait également possible d'utiliser un miroir courbe partiellement réfléchissant, apte à réfléchir et à collimater à l'infini l'image produite par le module de génération des symboles lumineux, tandis qu'il assure la transmission des rayons provenant du prisme récepteur.

Dans ce cas, pour éviter que la lumière engendrée par le module de génération des symboles lumineux ne soit pas visible à l'extérieur, il convient de prévoir en outre un filtre absorbant les longeurs d'onde des rayons lumineux produits par ledit module. Ce filtre sera alors disposé dans le trajet optique compris entre le miroir et les objets contenus dans le champ couvert par l'épiscope.

## Revendications

1. Episcope perfectionné du type comprenant au moins deux éléments réflecteurs, à savoir:
   – un élément réflecteur récepteur (1) dont la face réceptrice (8) est orientée dans l'axe du champ de vision extérieur que l'on désire couvrir et qui sert à réfléchir selon un deuxième axe, et
   – un élément réflecteur oculaire comportant un prisme oculaire (2) qui présente un dioptre (6') servant à réfléchir les rayons transmis par l'élément récepteur selon un troisième axe qui correspond à l'axe de vision normale de l'utilisateur (16), caractérisé en ce qu'au prisme oculaire (2) est associé un système de visualisation comprenant:
   – un module de génération (20) d'une image lumineuse agencé de manière à émettre un rayonnement lumineux passant au moins partiellement au travers du susdit dioptre (6') et se propageant dans le prisme oculaire (2) parallèlement et en sens inverse par rapport aux rayons lumineux transmis par l'élément récepteur (1), et
   – un composant optique holographique (27) apte à collimater à l'infini l'image engendrée par ledit module (20) et à réfléchir les rayons lumineux (M) produits par cette image parallèlement aux rayons lumineux (J') émanant de l'élément récepteur (1) et dans le même sens.

2. Episcope selon la revendication 1, caractérisé en ce que le susdit composant optique holographique est incorporé au prisme oculaire (2).

3. Episcope selon la revendication 2, dans lequel le susdit prisme oculaire (2) présente une forme trapézoïdale rectangle comprenant une grande et une petite base (3', 4'), deux faces latérales opposées parallèles (5'), une face oblique servant de dioptre (6') et une face droite (7') perpendiculaire à l'axe longitudinal (X, X') du prisme et située à l'opposé du dioptre (6'), caractérisé en ce que ce prisme oculaire (2) est réalisé en deux parties (25, 26) accolées l'une à l'autre selon une ligne de jonction (P) sensiblement perpendiculaire au trajet des rayons lumineux provenant de l'élément récepteur et passant à proximité de la face droite (7'), et en ce que l'une des deux faces en contact (27) de ces deux parties porte un hologramme apte à collimater à l'infini l'image engendrée par le susdit module (20) et à réfléchir les rayons lumineux (M) produits par cette image parallèlement aux rayons lumineux (J') émanant de l'élément récepteur (1) et qui ne sont pas affectés par ledit hologramme.

4. Episcope selon l'une des revendications précédentes, caractérisé en ce que le susdit composant holographique ou le susdit hologramme est en outre agencé de manière à effectuer la correction des aberrations géométriques de l'optique du système de visualisation (20, 21, 22, 23).

5. Episcope selon l'une des revendications précédentes, caractérisé en ce que le susdit système de visualisation comprend un prisme compensateur (23) destiné à éviter la réflexion totale des rayons lumineux (M) émanant du module de génération (20), et à annuler l'astigmatisme introduit par ce dioptre (6') sur ces rayons.

6. Episcope selon l'une des revendications précédentes, caractérisé en ce que le susdit dioptre (6) est localement traité de manière à permettre la transmission/réflexion des rayons lumineux (M, M') provenant du module (20).

7. Episcope selon l'une des revendications 5 et 6, caractérisé en ce qu'entre le susdit module de génération (20) et le susdit prisme compensateur (23) sont placés un miroir de repli (22) et, éventuellement, une optique de champ (21).

8. Episcope selon la revendication 7, caractérisé en ce que le susdit miroir de repli (22) est orientable de manière à pouvoir réfléchir plusieurs zones distinctes de l'image produite par le module de génération.

9. Episcope selon l'une des revendications précédentes, caractérisé en ce que le susdit module de génération (20) comprend une grille objet (31) dans laquelle sont découpées les formes des symboles (32) que l'on désire visualiser, un diffuseur et un système d'éclairage pouvant avantageusement consister en des diodes électroluminescentes, à raison d'une diode par symbole, encastrées dans une structure en nid d'abeille.

10. Episcope selon l'une des revendications précédentes, caractérisé en ce qu'il comprend, entre le susdit module de génération (20) et le susdit dioptre (6'), une optique correctrice (30).

11. Episcope selon l'une des revendications précédentes, caractérisé en ce que le susdit élément réflecteur récepteur (1) consiste en un prisme présentant une forme identique à celle du susdit prisme oculaire (2).

12. Episcope selon l'une des revendications précédentes, caractérisé en ce qu'il comprend à la place du susdit composant optique holographique, un miroir courbe partiellement réfléchissant, apte à réfléchir et à collimater à l'infini l'image produite par le susdit module de génération de symboles lumineux, tandis qu'il assure la transmission des rayons provenant du prisme récepteur.

13. Episcope selon la revendication 12, caractérisé en ce qu'il comprend en outre un filtre absorbant les longueurs d'onde des rayons lumineux produits par ledit module, ce filtre étant disposé dans le trajet optique compris entre le susdit miroir et les objets contenus dans le champ couvert par l'épiscope.

**Claims**

1. Improved episcope of the type comprising at least two reflecting elements, namely:
- a receiving reflecting element (1) the receiving surface (8) of which is oriented along the axis of the field of the outside vision it is desired to cover and which serves to reflect along a second axis, and
- an ocular reflecting element comprising an ocular prism (2) provided with a dioptre (6) serving to reflect the rays transmitted by the receiving element along a third axis which corresponds to the normal axis of the user's vision, characterized in that a visualizing system is associated with the ocular prism (2), comprising:
- a module (20) generating a light image arranged so as to emit light rays passing at least partially through said dioptre (6) and being propagated in the ocular prism (2) parallel and in the reverse direction with respect to the light rays transmitted by the receiving element (1), and
- a holographic optical component (27) adapted to collimate ad infinitum the image generated by said module (20) and to reflect the light rays (M) produced by said image parallel to the light rays (J') coming from the receiving element (1) and in the same direction.

2. Episcope according to claim 1, characterized in that said optical holographic component is incorporated in the ocular prism (2).

3. Episcope according to claim 2, in which said ocular prism (2) presents the form of a rectangular trapezium comprising a large and a small basis (3', 4'), two opposites parallel side faces (5'), an oblique face serving as a dioptre (6') and a straight face (7') orthogonal to the longitudinal axis (X, X') of the prism and located opposite the dioptre (6'), characterized in that the ocular prism (2) is made of two parts (25, 26) applied one against the other according to a junction line (P) substantially orthogonal to the path of the light rays coming from the receiving element and passing close to the straight face (7'), and in that one of the surfaces in contact (27) of these two parts bears a hologram adapted to collimate ad infinitum the image generated by said module (20) and to reflect the light rays (M) generated by said image parallel to the light rays (J') coming from the receiving element (1) and which are not affected by said hologram.

4. Episcope according to one of the preceding claims, characterized in that the said holographic component or the said hologram is further arranged so as to correct geometrical aberrations of the optical devices of the spectating system (20, 21, 22, 23).

5. Episcope according to one of the preceding claims, characterized in that said spectating system comprises a compensating prism (23) for avoiding the total reflection of the light rays (M) coming from the generating module (20) and for cancelling the astigmatism introduced by this dioptre (6') on these rays.

6. Episcope according to one of the preceding claims, characterized in that said dioptre (6) is locally treated so as to allow transmission/reflection of the light rays (M, M') coming from the module (20).

7. Episcope according to one of claims 5 and 6, characterized in that, between said generating module (20) and said compensating prism (23), a deviating mirror (22) and possibly a field optical device (21) are disposed.

8. Episcope according to claim 7, characterized in that said deviating mirror (22) can be oriented so as to reflect several separate zones of the image produced by the generating module.

9. Episcope according to one of the preceding claims, characterized in that said generating module (20) comprises a grid object (31) into which are cut the forms of the symbols (32) to be visualized, a diffuser and a lighting system being advantageously composed of light diodes, one diode being provided for each symbol, these diodes being inserted in a honeycomb-like structure.

10. Episcope according to one of the preceding claims, characterized in that it comprises, between the said generating module (20) and said dioptre (6'), a correcting optical device (30).

11. Episcope according to one of the preceding claims, characterized in that said receiving reflecting element (1) consists of a prism having a form similar to that of said ocular prism (2).

12. Episcope according to one of the preceding claims, characterized in that it comprises, instead of the said holographic optical component, a curved mirror which is partially reflecting, adapted to reflect and to collimate ad infinitum the image produced by said module for generating light symbols, while transmitting rays coming from the receiving prism.

13. Episcope according to claim 12, characterized in that it further comprises a filter absorbing the wave lengths of the light rays produced by said module, said filter being located in the optical path comprised between the said mirror and the objects contained in the field covered by the episcope.

**Patentansprüche**

1. Verbessertes Episkop mit mindestens zwei Reflektorelementen, und zwar:
– einem Empfangs-Reflektorelement (1), dessen Empfangsoberfläche (8) in der Achse des äusseren Sichtfeldes orientiert ist, das abgedeckt werden soll, und das der Reflexion entlang einer zweiten Achse dient, und
– einem Okular-Reflektorelement mit einem Okularprisma (2), das einen Diopter (6) aufweist, welcher der Reflexion der Strahlen dient, welche vom Empfangselement entlang einer dritten Achse übertragen werden, die der normalen Sehachse des Benutzers (16) entspricht, dadurch gekennzeichnet, dass dem Okularprisma (2) ein Beobachtungssystem zugeordnet ist, bestehend aus:
– einem Generatormodul (20) für ein Lichtbild, das so angeordnet ist, dass es Lichtstrahlung emittiert, die den genannten Diopter (6') mindestens teilweise passiert und sich in dem Okularprisma (2) parallel und in umgekehrter Richtung zu den vom Empfangselement (1) übertragenen Lichtstrahlen ausbreitet, und
– einem holographischen optischen Element (27) zur Einstellung des durch den genannten Modul (20) erzeugten Bildes auf unendlich und zur Reflexion der durch dieses Bild erzeugten Lichtstrahlen (M) parallel zu den von dem Rezeptorelement (1) ausgehenden Lichtstrahlen (J') und in der gleichen Richtung.

2. Episkop nach Anspruch 1, dadurch gekennzeichnet, dass das genannte holographische optische Element in dem Okularprisma (2) mit enthalten ist.

3. Episkop nach Anspruch 2, in dem das genannte Okularprisma (2) die Form eines trapezartigen Rechtecks mit einer grossen und einer kleinen Basis (3', 4'), zwei einander gegenüberliegenden parallelen Seitenflächen (5'), einer als Diopter (6') dienenden schrägen Fläche und einer geraden Fläche (7'), die senkrecht zur Längsachse (X, X') des Prismas und gegenüber dem Diopter (6') angeordnet ist, hat, dadurch gekennzeichnet, dass das Okularprisma (2) aus zwei Teilen (25, 26) besteht, die miteinander entlang einer Verbindungslinie (P) im wesentlichen senkrecht zum Weg der Lichtstrahlen verbunden sind, die vom Empfangselement ausgehen und in der Nähe der geraden Fläche (7') passieren, und dass eine der beiden miteinander in Kontakt stehenden Flächen (27) dieser beiden Teile ein Hologramm trägt, zur Einstellung des von dem genannten Modul (20) erzeugten Bildes auf Unendlich und zur Reflexion der durch dieses Bild erzeugten Lichtstrahlen (M) parallel zu den Lichtstrahlen (J'), die von dem Rezeptorelement (1) ausgehen und die durch dieses Hologramm nicht beeinflusst werden.

4. Episkop nach einem der vorhergehenden Ansprüche, dadurch gekennzeichnet, dass das genannte holographische Element oder das genannte Hologramm zusätzlich so angeordnet ist, dass die geometrischen Aberrationen der Optik des Beobachtungssystems (20, 21, 22, 23) korrigiert werden.

5. Episkop nach einem der vorhergehenden Ansprüche, dadurch gekennzeichnet, dass das genannte Beobachtungssystem ein Kompensationsprisma (23) umfasst, das dazu dient, die Totalreflexion der von dem Generatormodul (20) ausgehenden Lichtstrahlen (M) zu vermeiden und den durch den Diopter (6') in diese Strahlen eingeführten Astigmatismus zu beseitigen.

6. Episkop nach einem der vorhergehenden Ansprüche, dadurch gekennzeichnet, dass der genannte Diopter (6) lokal so behandelt wird, dass er die Transmission/Reflexion der von dem Modul (20) ausgehenden Lichtstrahlen (M, M') erlaubt.

7. Episkop nach einem der Ansprüche 5 und 6, dadurch gekennzeichnet, dass zwischen dem genannten Generatormodul (20) und dem genannten Kompensationsprisma (23) ein Umlenkspiegel (22) und gegebenenfalls eine Feldoptik (21) angeordnet sind.

8. Episkop nach Anspruch 7, dadurch gekennzeichnet, dass der besagte Umlenkspiegel (22) so ausgerichtet werden kann, dass er mehrere voneinander getrennte Zonen des durch den Generatormodul erzeugten Bildes reflektieren kann.

9. Episkop nach einem der vorhergehenden Ansprüche, dadurch gekennzeichnet, dass der genannte Generatormodul (20) ein Gitterobjekt (31) umfasst, in das die Formen der Symbole (32), die man zu beobachten wünscht eingeschnitten sind, einen Diffuser und ein Beleuchtungssystem, das zweckmässig aus Elektrolumineszenz-Dioden bestehen kann, mit einer Diode pro Symbol, die in ein Wabenmuster eingebaut sind.

10. Episkop nach einem der vorhergehenden Ansprüche, dadurch gekennzeichnet, dass zwischen dem genannten Generatormodul (20) und dem genannten Diopter (6') eine Korrekturoptik (30) angeordnet ist.

11. Episkop nach einem der vorhergehenden Ansprüche, dadurch gekennzeichnet, dass das genannte Empfangs-Reflektorelement (1) aus einem Prisma besteht, das eine identische Form wie das genannte Okularprisma (2) hat.

12. Episkop nach einem der vorhergehenden Ansprüche, dadurch gekennzeichnet, dass anstelle des genannten holographischen optischen Elements ein teilweise reflektierender, gekrümmter Spiegel zur Reflexion und Einstellung des durch das genannte Lichtsymbolgeneratormodul erzeugten Bildes auf Unendlich vorgesehen ist, der ebenfalls der Transmission der von dem Empfangsprisma ausgehenden Strahlen dient.

13. Episkop nach Anspruch 12, dadurch gekennzeichnet, dass ausserdem ein Filter vorgesehen ist, das die Wellenlängen der von dem genannten Modul erzeugten Lichtstrahlen absorbiert und das in dem optischen Weg zwischen dem genannten Spiegel und den in dem von dem Episkop abgedeckten Feld enthaltenen Objekten angeordnet ist.

FIG.1

FIG.2

FIG.4

FIG.3